# EUROPÄISCHE PATENTSCHRIFT

(11) **EP 3 386 811 B1**
(45) Veröffentlichungstag und Bekanntmachung des Hinweises auf die Patenterteilung: **09.12.2020**
(21) Anmeldenummer: 16785511.3
(22) Anmeldetag: 26.10.2016
(51) Int. Cl.: B60S 1/52, B60S 1/48, B60S 1/34

(54) **SCHLAUCHHALTER FÜR EINEN WISCHARM, EIN WISCHARM MIT EINEM SCHLAUCHHALTER, ALS AUCH EIN VERFAHREN ZUM HERSTELLEN SOLCH EINES SCHLAUCHHALTERS**
TUBE HOLDER FOR A WIPER ARM, WIPER ARM HAVING A TUBE HOLDER, AND METHOD FOR PRODUCING SUCH A TUBE HOLDER
SUPPORT DE TUYAU POUR BRAS D'ESSUIE-GLACE, BRAS D'ESSUIE-GLACE MUNI D'UN SUPPORT DE TUYAU, ET PROCÉDÉ DE PRODUCTION DUDIT SUPPORT DE TUYAU

(30) Priorität: 08.12.2015 DE 102015224620
(43) Veröffentlichungstag der Anmeldung: 17.10.2018
(73) Patentinhaber: Robert Bosch GmbH, 70442 Stuttgart (DE)
(72) Erfinder: RAPP, Harald, 77815 Buehl (DE); HORVATH, Zsofia, 8175 Balatonfüzfo (HU)
(86) Internationale Anmeldenummer: PCT/EP2016/075719
(87) Internationale Veröffentlichungsnummer: WO 2017/097489

(56) Entgegenhaltungen:
- EP-A1- 0 532 417
- EP-A1- 0 845 395
- DE-A1- 3 740 639
- DE-A1- 4 415 081
- US-A- 5 430 909

## Beschreibung

Die Erfindung betrifft einen Schlauchhalter für einen Wischarm, einen Wischarm mit einem Schlauchhalter, als auch ein Verfahren zum Herstellen eines Schlauchhalters gemäß der unabhängigen Ansprüche.

### Stand der Technik

Es sind Wischarme bekannt, an denen Düsen angebracht sind. Die Düsen dienen zum Spritzen von Wischwasser. Das Wischwasser muss aus einem Tank, welcher sich vorzugsweise außerhalb des Wischarms befindet bis zu den Düsen transportiert werden. Der Transport des Wischwassers erfolgt durch Schläuche. Dabei sind die Düsen durch einen Schlauch mit dem Tank verbunden. Da die Düsen an dem Wischarm angebracht sind, müssen die Schläuche entlang des Wischarms verlaufen, um zu dem externen Tank zu gelangen. Um dies effektiv zu bewerkstelligen, sind Schlauchhalter notwendig. Vorzugsweise ist solch ein Wischarm an einem Kraftfahrzeug angebracht. DE-A-4415081 offenbart den Oberbegriff des Anspruchs 1.

### Beschreibung

Die Erfindung gemäß der unabhängigen Ansprüche hat den Vorteil, dass ein besonders effektives Anbringen eines Schlauchs an einen Wischarm möglich ist. Dazu ist ein Schlauchhalter bereitgestellt, der für einen Wischarm geeignet ist. Der Schlauchhalter umfasst einen Bügel, einen formschlüssigen Verschluss und eine Schlauchaufnahme. Weiter weist der Schlauchhalter eine Wischeraufnahme auf, in die der Wischarm angeordnet werden kann. Der Bügel ist klappbar ausgebildet. Dazu kann der Bügel so umgeklappt werden, dass der Wischarm in der Wischaufnahme fixiert wird. So ist der Wischarm von dem Schlauchhalter umschlossen. Der Schlauchhalter bzw. die Wischeraufnahme kann durch den Bügel verschlossen werden. Solch ein Schlauchhalter ist insbesondere für einen Wischarm, der an einem Kraftfahrzeug angebracht ist geeignet. Vorteilhafter Weise ist die Wischeraufnahme als ein Hohlraum ausgebildet, der sich zwischen dem Bügel und der Schlauchaufnahme befindet. Denkt man sich einen Schlauchhalter, der einen umgeklappten Bügel aufweist, also die Wischeraufnahme geschlossen ist, so ist die Wischeraufnahme zwischen dem Bügel und der Schlauchaufnahme als Hohlraum ausgebildet. Die Wischeraufnahme weist dabei eine Basis auf, die nicht beweglich ist. Die Basis ist bzgl. des Hohlraums auf einer gegenüberliegenden Seite angeordnet. Dabei weisen sowohl die Basis als auch der Bügel eine Kontur auf, die der des Wischarms entspricht. Insbesondere weisen sowohl Bügel als auch Basis gerade Abschnitte auf, die vorzugsweise zueinander parallel sind. Dies ermöglicht eine optimale Halterung des Wischarms in der Wischeraufnahme.

Nach der Erfindung weist die Wischeraufnahme einen seitlichen Anschlag für den Wischarm in der Aufnahme auf, der an der Basis angebracht ist. Die Wischeraufnahme und der Anschlag sind zueinander quer angeordnet. Dabei weist der Anschlag ein vorzugsweise freies Ende auf und ein festes Ende, welches an der Basis angebracht ist. Nach der Erfindung ist der Anschlag flexibel ausgebildet, sodass der Wischarm eine Auslenkung des Anschlags erzeugen kann. Es ist auch denkbar, dass der Bügel eine Auslenkung des Anschlags erzeugt. Auf diese Weise wird ein sicherer Halt des Wischarms in der Wischaufnahme gewährleistet. Der Wischarm wird dabei in die Aufnahme eingelegt, und an den Anschlag geschoben.

In einer vorteilhaften Weiterbildung liegt der Bügel von außen an dem Anschlag an, wenn der Bügel geschlossen ist. Wenn der Bügel die Wischeraufnahme abschließt, also auf die Wischeraufnahme geklappt ist, liegt der Bügel von außen an dem Anschlag an. Dabei drückt der Bügel vorzugsweise den Anschlag gegen den Wischarm. Somit wird der Anschlag gegen den Wischarm gepresst und es kommt zu einem festen Sitz des Wischarms.

Eine weitere nutzbringende Ausführungsform ist dadurch gebildet, dass auf der Seite des Bügels, die der Wischeraufnahme zugewandt ist, eine Strebe ausgebildet ist. Diese Strebe ist vorzugsweise flexibel. Dabei erstreckt sich die Strebe von dem Bügel ausgehend. Weiter endet die Strebe wieder auf dem Bügel. Auf diese Weise ist zwischen Bügel und Strebe ein Hohlraum ausgebildet. Dieser Hohlraum ist ein geschlossener Raum in Tangentialrichtung. Die Strebe ist auf der gegenüberliegenden Seite des Hohlraums bezüglich des Anschlags am Bügel angeordnet. Ist nun der Bügel geschlossen, so ist zwischen Strebe und Anschlag der Hohlraum der Wischeraufnahme angeordnet. Wird nun ein Wischerarm in der Wischeraufnahme angeordnet und der Bügel geschlossen, so liegt der Wischarm zum einen am Anschlag und zum anderen an der Strebe an. Vorzugsweise wird dabei die Strebe radial nach außen ausgelenkt, so dass der geschlossene Raum verkleinert wird. Es sit auch denkbar, dass die Strebe lediglich ein festes Ende, und ein freies Ende aufweist.

Lohnend ist es einen Verschluss an dem Bügel anzubringen. Der Verschluss ist dabei hakenförmig ausgebildet. Der Verschluss umfasst einen Bügelhaken, der am Bügel angebracht ist, und einen Basishaken der an der Basis angebracht ist. Die beiden Haken sind komplementär zu einander ausgebildet. Das Gegenstück zu dem hakenförmigen Bügelhaken ist der Basishaken, der an einem freien Ende der Basis angeordnet ist. Der Bügelhaken greift dabei in den Basishaken ein. Der Bügelhaken umgreift den Basishaken. Der Bügel weist ein freies und ein festes Ende auf. An dem freien Ende ist der Bügelhaken angeordnet. Das feste Ende des Bügels ist mittelbar oder unmittelbar mit der Basis verbunden. Ebenso weist die Basis ein freies Ende auf, an dem der Basishaken angebracht ist. Der Haken des Bügelhakens greift in den Haken des Basishakens ein. Basishaken und Bügelhaken bilden eine formschlüssige Verbindung. Da der Bügel flexibel ist und eine Federkraft aufweist, die radial nach außen wirkt, also von der Basis weg, sitzt der Bügelhaken fest in dem Basishaken. Somit ist es notwendig eine Kraft aufzuwenden, die entgegen der Federkraft in Radialrichtung wirkt, um den Bügelhaken von dem Basishaken zu lösen. Auf diese Weise wird ein besonders sicherer Verschluss erzeugt. Der Basishaken ist seitlich angeordnet und dem Anschlag gegenüberliegend bzgl. des Hohlraums angeordnet.

Auf der dem Hohlraum zugewandten Seite des Bügels ist eine Nase angeordnet, die in den Raum der Wischeraufnahme hinein ragt. Da der Bügel vorzugsweise einen geraden Abschnitt aufweist, der parallel zur Basis ausgebildet ist, ist es vorteilhaft, wenn die Nase an dem geraden Abschnitt angeformt ist. Durch die Nase wird ein sicheres Fixieren des Wischarms in der Wischeraufnahme gewährleistet.

Ist die Schlauchaufnahme an der Basis ausgebildet, so ermöglicht es ein einfaches Befestigen eines Schlauchs. Dabei ist die Schlauchaufnahme auf der Seite der Basis ausgebildet, die dem Hohlraum gegenüberliegt. Die Schlauchaufnahme besteht dabei aus zwei Fortsätzen, die sich von der Basis aus weg erstrecken. Somit sind die freien Enden der beiden Fortsätze von der Wischeraufnahme weggerichtet. Die Fortsätze bilden dabei im Wesentlichen eine kreisrunde Aufnehmung. Im Wesentlichen bedeutet, dass die kreisrunde Aufnehmung auch gerade Abschnitte bzw. Knicke aufweisen kann. Der Durchmesser der Ausnehmung bzw. der Abstand der Fortsätze ist dabei größer als der Abstand der freien Enden der Fortsätze. Das bedeutet, dass der Ort der freien Enden den geringsten Abstand gegenüber den anderen Orten entlang der Fortsätze aufweist.

Lohnenswerter Weise weisen die Fortsätze in allen Orten gleiche Wandungsstärken auf. Das bedeutet, dass die Fortsätze keinen Ort aufweisen, der eine dünnere Wandungsstärke gegenüber einem benachbarten Ort aufweist. Dies ermöglicht, dass die Fortsätze robust sind. Vorzugsweise weicht die Aufnahme der zwischen den Fortsätzen von ihrer kreisförmigen Form ab, in dem gerade Abschnitte ausgebildet sind.

In einer bevorzugten Ausführungsform geht der Bügel kontinuierlich in einen Fortsatz über. Dabei ist keine Naht bzw. kein Knick zwischen dem Bügel und dem Fortsatz ausgebildet. Es ist aber auch denkbar, dass der Bügel aus der Basis entspringt und der Fortsatz an der Basis angeformt ist. Denkt man sich eine Linie von dem Bügel ausgehend bis zum Fortsatz, dann können zwei Fälle unterschieden werden. Beim ersten Fall läuft die Linie vom freien Ende des Bügels ausgehend an dem der Bügelhaken angeformt ist durch den Bügel direkt in den Fortsatz hinein. Beim zweiten Fall verläuft die Linie von dem freien Ende ausgehend, an dem der Bügelhaken angeformt ist, durch den Bügel und anschließend durch die Basis, um dann in einem Fortsatz zu enden. In dem Schlauchhalter ist auch eine zweite Linie denkbar, die von dem Basishaken ausgehend durch die Basis verläuft um dann in einem Fortsatz zu enden. Es ist somit auch eine dritte Linie denkbar, die von dem Basishaken ausgehend durch die Basis verläuft um dann in den Bügel weiter geführt zu werden, um am Bügelhaken zu enden. Dabei ist die Schlauchaufnahme an der Basis angeformt.

Zweckmäßiger Weise weist der Schlauchhalter an seinen axialen Enden eine Kante auf, die nach außen gerichtet ist bzgl. der Radialrichtung. Die Kante weist dabei einen Radius auf. Auf diese Weise wird eine scharfkantige Kontur an den axialen Enden des Schlauchhalters vermieden. Dabei ist denkbar, dass alle umlaufenden Kanten an den axialen Enden einen Radius aufweisen, sodass keine scharfen Ecken entstehen. Als scharfe Ecke ist auch ein 90° Winkel zu verstehen.

In einer wohl überlegten und hervorragenden und jeglichen Stand der Technik hinsichtlich erfinderischer Tätigkeit überstrahlenden Ausführungsform ist der Schlauchhalter aus einem flexiblen Kunststoff gefertigt.

### Zeichnungen der Erfindung

Es zeigen:
- Figur 1: einen Schlauchhalter mit einem in der Wischaufnahme angeordneten Wischarm, wobei der Schlauchhalter durch den Bügel nicht verschlossen ist,
- Figur 2: einen erfindungsgemäßen geschlossenen Schlauchhalter,
- Figur 3: ein Kraftfahrzeug mit einem Wischarm, wobei an dem Wischarm ein Schlauch durch den erfindungsgemäßen Schlauchhalter positioniert ist.

### Ausführungsform der Erfindung

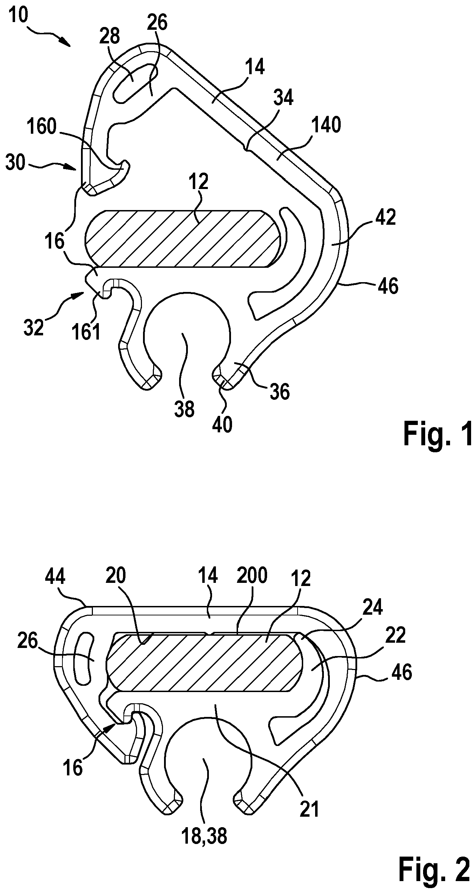

In der Figur 1 ist ein Schlauchhalter 10 für einen Wischarm 12 gezeigt. Der Wischarm 12 umfasst einen Bügel 14, einen formschlüssigen Verschluss 16 und eine Schlauchaufnahme 18. Außerdem umfasst der Schlauchhalter 10 eine Wischeraufnahme 20. Dabei ist der Bügel 14 auf die Wischeraufnahme 20 klappbar ausgebildet. Das bedeutet, dass der Bügel 14 so heruntergeklappt werden kann, dass er auf der Wischeraufnahme 20 zu liegen kommt, und diese abschließt. Dabei ist in Figur 1 ein Schlauchhalter 10 gezeigt, dessen Bügel 14 nicht geschlossen ist. Der Bügel 14 wird durch den Verschluss 16 auf der Wischeraufnahme 20 fixiert. Solch ein geschlossener Bügel 14, der durch den Verschluss 16 fixiert ist, ist in Figur 2 gezeigt. In Figur 2 ist der Bügel 14 heruntergeklappt. Dabei liegt der Bügel 14 auf der Wischeraufnahme 20 auf.

Die Wischeraufnahme 20 ist als Hohlraum 200 zwischen dem Bügel 14 und der Schlauchaufnahme 18 ausgebildet. Dies ist in Figur 2 zu sehen. Der geschlossene Bügel 14, welcher auf die Wischeraufnahme 20 geklappt ist, ist der Schlauchaufnahme 18 gegenüberliegend angeordnet. Die Schlauchaufnahme 18 weist dabei von der Wischeraufnahme 20 bzw. dem Hohlraum 200 weg. Somit weist die Schlauchaufnahme 10 einen geschlossenen Hohlraum 200 auf. Durch den Hohlraum 200 sind eine Basis 21 der Wischeraufnahme 20 und der Bügel 14 getrennt. Sowohl der Bügel 14 als auch die Basis 21 weisen dabei gerade Abschnitte auf, die vorzugsweise parallel zueinander angeordnet sind. Somit ist die gesamte Wischeraufnahme 20 bzw. ihr Hohlraum 200 im Wesentlichen quaderförmig ausgebildet. Das bedeutet, dass sie Längsseiten aufweist, die gerade sind. Ist der Bügel 14 nicht auf die Wischeraufnahme 20 aufgeklappt, also die Schlauchhalterung 10 geöffnet, so schließen die geraden Abschnitte der Basis 21 und des Bügels 14 einen Winkel ein, was in Figur 1 gezeigt ist.

Die Wischeraufnahme 20 weist einen seitlichen Anschlag 22 auf, was in Figur 1 als auch 2 gezeigt ist. Dabei ist der Anschlag 22 an der Basis 21 angebracht. Der Anschlag 22 erstreckt sich im Wesentlichen quer zur Basis 21. Vorteilhafter Weise ist der Anschlag 22 auf der gegenüberliegenden Seite der Basis 21 bzgl. des Verschlusses 16 angeordnet. Somit kann der Wischarm 12 durch eine Öffnung 11 in die Schlauchhalterung 10 geschoben werden, bis er an den Anschlag 22 anschlägt. Die Öffnung 11 ist in Figur 1 gezeigt. Die Öffnung 11 entsteht wenn der Bügel 14 nicht auf die Wischeraufnahme 20 aufgeklappt ist.

Somit ist die Öffnung 11 bei nicht verschlossenem Schlauchhalter 10 vorhanden. Der Anschlag 22 weist dabei insbesondere ein freies Ende 24 auf. Sein festes Ende ist an der Basis 21 angebracht. Idealer Weise weist der Anschlag 22 eine Kontur auf, die der des Bügels 14 entspricht. Im geschlossenen Zustand drückt der Bügel 14 gegen den Anschlag 22. Ist nun ein Wischarm 12 in der Wischeraufnahme 20 angeordnet und der Bügel 14 durch den Verschluss 16 geschlossen, presst der Bügel 14 den Anschlag 22 gegen den Wischarm 12, was zu einem festen Sitz des Wischarms 12 in der Schlauchhalterung 10 führt.

Der Bügel 14 weist an der Seite, die dem Anschlag 22 gegenüber liegt eine Strebe 26 auf. Die Strebe 26 erstreckt sich auf der Innenseite des Bügels 14 in der Weise, dass sie auf der Innenseite des Bügels 14 entspringt, und wieder auf dieser endet. So wird ein Hohlraum 28 geschaffen, der zwischen Strebe 26 und Bügel 14 ausgebildet ist. Die Strebe 26 ist flexibel. Ist nun ein Wischarm 12 in der Wischeraufnahme 20 angeordnet und der Bügel 14 geschlossen, so wird der Wischarm 12 zum einen durch den Anschlag 22 und zum anderen durch die Strebe 26 in der Wischaufnahme 20 festgehalten. Dabei formt sich die Strebe 26 entsprechend des Wischarms 12 in Richtung Hohlraum 28 aus. Der Hohlraum 28 wird dabei verkleinert. Eine weitere Maßnahme zum besseren Fixieren des Wischarms 12 in dem Hohlraum 200 ist durch die Nase 34 an der Innenseite des Bügels 14 gegeben. Die Nase 34 ist als kleines dreieckförmiges Gebilde am Bügel 14 in der Weise ausgebildet, dass die Nase 34 in den Hohlraum 200 hineinragt. Wird nun der Bügel 14 geschlossen, so drückt die Nase 34 auf den Wischarm 12. Es ist auch denkbar mehrere Nasen 34 auf der Innenseite des Bügels 14 auszubilden. Es ist ebenso denkbar der Nase 34 eine andere Form als eine dreieckige zu verleihen. So sind kreisförmige oder punktförmige Nasen 34 denkbar.

Der Verschluss wie er in Figur 1 und 2 abgebildet ist, ist ein hakenförmiger Verschluss 16. Dabei ist ein Haken 30 an dem freien Ende des Bügels 14 ausgebildet. Dieser Bügelhaken 30 umgreift einen Basishaken 32, welcher an einem freien Ende der Basis 21 ausgebildet ist. Dieses Umgreifen ist in Figur 2 dargestellt. In Figur 1 ist ein geöffneter Verschluss 16 abgebildet. An dem freien Ende 30 des Bügels 14 weist der Bügelhaken 160 bezüglich der Radialrichtung nach innen, während der Basishaken 161 am freien Ende 32 der Basis 21 nach außen weist. In Figur 2 ist gezeigt, wie die Haken 161, 160 ineinander greifen.

An der radial nach außen gerichteten Seite der Basis 21 ist die Schlauchaufnahme 18 ausgebildet, wobei die Schlauchaufnahme 18 eine kreisrunde Ausnehmung 38 aufweist, die nach außen hin geöffnet ist. Die Schlauchaufnahme 18 wird durch zwei Fortsätze 36 gebildet. Die zwei Fortsätze 36 weisen freie Enden 40 auf, die nach außen gerichtet sind. Geht man von der Basis 21 aus, sind die Fortsätze 36 mit ihren festen Enden an der Basis angebracht und es streckt sich radial nach außen, so dass ihre freien Enden 40 von der Basis weggerichtet sind. So kann ein Schlauch 180 von außen in die Schlauchaufnahme 18 eingelegt werden. Ein angeordneter Schlauch 180 ist in Figur 1 als auch 2 gezeigt. Die kreisförmige Ausnehmung 38 kann von ihrer Kreisform wenigstens teilweise abweichen. So sind gerade Abschnitte insbesondere im Bereich des Verschlusses 16 in der Schlauchaufnahme 18 bzw. der Ausnehmung 38 ausgebildet.

Der Bügel 14 erstreckt sich dabei von einem Fortsatz 36 ausgehend an dem Anschlag 22 vorbei. Der Bügel 14 ist dabei so angeordnet, dass er auf der Seite der Basis 21 ausgebildet ist, die der Schlauchaufnahme 18 gegenüberliegt. Dabei sind der Anschlag 22 und der Bügel 14 nicht unmittelbar miteinander verbunden. Der Anschlag 22 und der Bügel 14 sind getrennt voneinander ausgebildet, wobei der Anschlag 22 an der Basis 21 angebracht ist, während der Bügel 14 an einem Fortsatz 36 ausgebildet ist.

Die Schlauchhalterung aus Figur 1 und 2 ist aus Kunststoff ausgebildet. Der Kunststoff der Schlauchhalterung 10 ist dabei flexibel.

An den axialen Enden der Schlauchhalterung 10 ist eine Kante 44 ausgebildet, die in Radialrichtung 2 nach außen gerichtet ist. An dieser Kante 44 ist ein Radius 46 angeformt, der sich entlang der gesamten Kante 44 oder wenigstens teilweise entlang der Kante 44 ausgeformt ist.

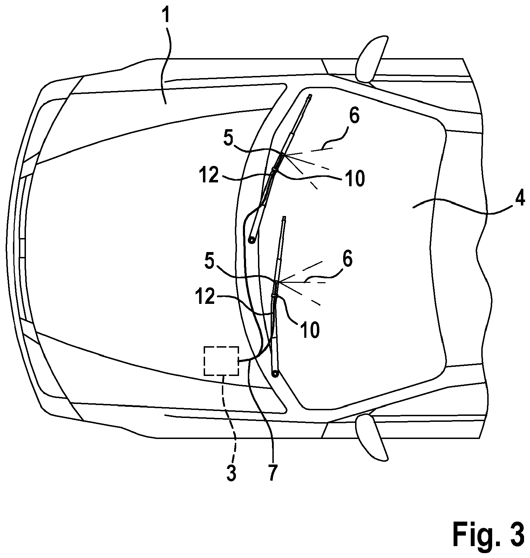

In Figur 3 ist ein Kraftfahrzeug 1 abgebildet, welches einen Wischwassertank 3, eine Scheibe 4, einen Wischarm 12 aufweist. An dem Wischarm 12 ist eine Spritzdüse 4 angeordnet, die Wischwasser 6 auf die Scheibe 4 spritzt. Die Spritzdüse 5 ist durch einen Schlauch 7 mit dem Wischwassertank 3 verbunden. Der Schlauch 7 ist wenigstens teilweise an dem Wischarm 12 angeordnet. Dabei ist der Schlauch 7 durch die erfindungsgemäße Schlauchhalterung 10 an dem Wischarm 12 befestigt. Dabei ist die Schlauchhalterung 10 an dem Wischarm 12 angebracht.

Die Merkmale sämtlicher Ausführungsformen der vorliegenden Erfindung sind miteinander zu neun erfindungsgemäßen Ausführungsformen kombinierbar.

## Patentansprüche

1. Schlauchhalter (10) für einen Wischarm (12) umfassend, einen Bügel (14), einen formschlüssigen Verschluss (16), und eine Schlauchaufnahme (18), und eine Wischeraufnahme (20), wobei der Bügel (14) auf die Wischeraufnahme (20) klappbar ist, sodass die Wischeraufnahme (20) durch den Bügel (14) verschließbar ist, und der Bügel (14) durch den Verschluss (16) auf der Wischeraufnahme (20) fixierbar ist, **dadurch gekennzeichnet, dass** die Wischeraufnahme (20) einen seitlichen Anschlag (22) aufweist, der an der Basis (21) angebracht ist, und sich quer zu dieser erstreckt, und der flexibel ist.

2. Schlauchhalter (10) nach Anspruch 1, **dadurch gekennzeichnet, dass** die Wischeraufnahme (20) als Hohlraum (200) zwischen dem Bügel (14) und der Schlauchaufnahme (18) angeordnet ist, wobei die Wischeraufnahme (20) eine Basis (21) aufweist, die dem Bügel (14) bezüglich des Hohlraums (200) - insbesondere teilweise parallel - gegenüberliegt.

3. Schlauchhalter (10) nach Anspruch 1 oder 2, wobei der Anschlag (22) ein freies Ende (24) aufweist.

4. Schlauchhalter (10) nach einem der vorherigen Ansprüche, **dadurch gekennzeichnet, dass** der Bügel (14) von außen an den Anschlag (22) im geschlossenen Zustand anliegt, und der Bügel den Anschlag (22) vorzugsweise gegen den Wischarm (12) presst.

5. Schlauchhalter (10) nach einem der vorherigen Ansprüche, **dadurch gekennzeichnet, dass** auf der Seite des Bügels (14), die der Wischeraufnahme (12) zugewandt ist, seitlich eine - vorzugsweise flexible - Strebe (26) ausgebildet ist, die dem Anschlag (22) gegenüberliegt, wobei zwischen dem Bügel (14) und der Strebe (26) ein geschlossener Raum (28) ausgebildet ist.

6. Schlauchhalter (10) nach einem der vorherigen Ansprüche, **dadurch gekennzeichnet, dass** der Verschluss (16) hakenförmig ausgebildet ist, wobei ein Bügelhaken (160) am freien Ende (30) des Bügels (14) angeordnet ist, und ein Basishaken (161) am freien Ende (32) der Basis angeordnet ist, sodass im verschlossenen Zustand der Bügelhaken (160) den Basishaken (161) umgreift.

7. Schlauchhalter (10) nach einem der vorherigen Ansprüche, **dadurch gekennzeichnet, dass** der Basishaken (161) seitlich angeordnet ist, und dem Anschlag (22) gegenüber liegt.

8. Schlauchhalter (10) nach einem der vorherigen Ansprüche, **dadurch gekennzeichnet, dass** auf der Hohlraum (200) zugewanden Seite des Bügels (14) eine Nase (34) angeordnet ist, in die Wischeraufnahme (20) hineinragt, wobei die Nase (34) vorzugsweise an dem Abschnitt (140) des Bügels (14) angeordnet ist, der in etwa parallel der Basis (21) gegenüberliegt.

9. Schlauchhalter (10) nach einem der vorherigen Ansprüche, **dadurch gekennzeichnet, dass** die Schlauchaufnahme (18) aus zwei Fortsätzen (36) besteht, die sich von der Basis (21) aus weg von der Wischeraufnahme (20) erstrecken, wobei zwischen den Fortsätzen (36) im Wesentlichen eine kreisrunde Ausnehmung (38) ausgebildet ist, wobei der Durchmesser der Ausnehmung (38) größer ist, als der Abstand der freien Enden (40) der Fortsätze (36).

10. Schlauchhalter (10) nach einem der vorherigen Ansprüche, **dadurch gekennzeichnet, dass** das die Fortsätze (36) durchgehend die gleiche Wandungsstärke aufweisen, wobei die Fortsätze (36) vorzugsweise von ihrer kreisförmigen Form abweichen, und gerade Abschnitte aufweisen.

11. Schlauchhalter (10) nach einem der vorherigen Ansprüche, **dadurch gekennzeichnet, dass** ein Fortsatz (36) kontinuierlich in den Bügel (14) übergeht.

12. Schlauchhalter (10) nach einem der vorherigen Ansprüche, **dadurch gekennzeichnet, dass** der Schlauchhalter (10) an seinen axialen Enden (42), eine Kante (44) aufweist, die radial nach außen gerichtet ist, wobei die Kante (44) einen Radius (46) aufweist.

13. Schlauchhalter (10) nach einem der vorherigen Ansprüche, **dadurch gekennzeichnet, dass** der Schlauchhalter (10) einen flexiblen Kunststoff aufweist.

14. Wischarm (12) mit einem Schlauchhalter (10) nach einem der vorherigen Ansprüche der an einem Kraftfahrzeug (1) angebracht ist.

15. Verfahren zum Herstellen eines Schlauchhalters (10) nach einem der vorherigen Ansprüche, **dadurch gekennzeichnet, dass** der Schlauchhalter (10) extrudiert oder spritzgegossen ist.

## Claims

1. Tube holder (10) for a wiper arm (12), comprising a bracket (14), a positively locking closure (16) and a tube receptacle (18), and a wiper receptacle (20), wherein the bracket (14) can be folded onto the wiper receptacle (20) such that the wiper receptacle (20) can be closed by the bracket (14), and the bracket (14) can be fixed onto the wiper receptacle (20) by means of the closure (16), **characterized in that** the wiper receptacle (20) has a lateral stop which is attached to the base (21) and extends transversely with respect thereto and which is flexible.

2. Tube holder (10) according to Claim 1, **characterized in that** the wiper receptacle (20) is arranged as a cavity (200) between the bracket (14) and the tube receptacle (18), wherein the wiper receptacle (20) has a base (21) which lies opposite, and in particular partially in parallel, to the bracket (14) with respect to the cavity (200).

3. Tube holder (10) according to Claim 1 or 2, wherein the stop (22) has a free end (24).

4. Tube holder (10) according to one of the preceding clams, **characterized in that** the bracket (14) lies against the stop (22) from the outside in the closed state, and the bracket preferably presses the stop (22) against the wiper arm (12).

5. Tube holder (10) according to one of the preceding claims, **characterized in that** a preferably flexible strut (26) is formed laterally on that side of the bracket (14) which faces the wiper receptacle (12), the strut lying opposite the stop (22), wherein a closed space (28) is formed between the bracket (14) and the strut (26).

6. Tube holder (10) according to one of the preceding claims, **characterized in that** the closure (16) is hook-shaped, with a bracket hook (160) being arranged at the free end (30) of the bracket (14) and a base hook (161) being arranged at the free end (32) of the base such that, in the closed state, the bracket hook (160) engages around the base hook (161) .

7. Tube holder (10) according to one of the preceding claims, **characterized in that** the base hook (161) is arranged laterally and lies opposite the stop (22) .

8. Tube holder (10) according to one of the preceding claims, **characterized in that** a lug (34) is arranged on a side of the bracket (14) facing the cavity (200), said lug projecting into the wiper receptacle (20), wherein the lug (34) is preferably arranged in that portion (140) of the bracket (14) which lies approximately parallel to the base (21).

9. Tube holder (10) according to one of the preceding claims, **characterized in that** the tube receptacle (18) consists of two extensions (36) which, starting from the base (21), extend away from the wiper receptacle (20), wherein a circular recess (38) is substantially formed between the extensions (36), wherein the diameter of the recess (38) is greater than the distance between the free ends (40) of the extensions (36).

10. Tube holder (10) according to one of the preceding claims, **characterized in that** the extensions (36) have the same wall thickness throughout, wherein the extensions (36) preferably deviate from their circular shape and have rectilinear portions.

11. Tube holder (10) according to one of the preceding claims, **characterized in that** one extension (36) merges continuously into the bracket (14).

12. Tube holder (10) according to one of the preceding claims, **characterized in that** the tube holder (10) has an edge (44) at its axial ends (42), said edge being directed radially outwards, wherein the edge (44) has a radius (46).

13. Tube holder (10) according to one of the preceding claims, **characterized in that** the tube holder (10) comprises a flexible plastic.

14. Wiper arm (12) having a tube holder (10) according to one of the preceding claims, said wiper arm being attached to a motor vehicle (1).

15. Method for producing a tube holder (10) according to one of the preceding claims, **characterized in that** the tube holder (10) is extruded or injection-moulded.

## Revendications

1. Support de tuyau (10) destiné à un bras d'essuie-glace (12) et comprenant un étrier (14), une fermeture à complémentarité de formes (16), et un réceptacle de tuyau (18), et un réceptacle d'essuie-glace (20), l'étrier (14) pouvant être replié sur le réceptacle d'essuie-glace (20) de sorte que le réceptacle d'essuie-glace (20) puisse être fermé par l'étrier (14), et l'étrier (14) pouvant être fixé sur le réceptacle d'essuie-glace (20) par la fermeture (16), **caractérisé en ce que** le réceptacle d'essuie-glace (20) comporte une butée latérale (22) qui est montée sur la base (21) et s'étend transversalement à celle-ci et qui est flexible.

2. Support de tuyau (10) selon la revendication 1, **caractérisé en ce que** le réceptacle d'essuie-glace (20) est ménagé sous la forme d'une cavité (200) entre l'étrier (14) et le réceptacle de tuyau (18), le réceptacle d'essuie-glace (20) comportant une base (21) qui est opposée à l'étrier (14) par rapport à la cavité (200) - en particulier partiellement en parallèle.

3. Support de tuyau (10) selon la revendication 1 ou 2, la butée (22) comportant une extrémité libre (24).

4. Support de tuyau (10) selon l'une des revendications précédentes, **caractérisé en ce que** l'étrier (14) vient en appui depuis l'extérieur sur la butée (22) à l'état fermé, et l'étrier presse la butée (22) de préférence contre le bras d'essuie-glace (12).

5. Support de tuyau (10) selon l'une des revendications précédentes, **caractérisé en ce qu'**un montant (26) (de préférence flexible), qui est opposé à la butée (22), est formé latéralement du côté de l'étrier (14), qui est dirigé vers le réceptacle d'essuie-glace (12), un espace fermé (28) étant ménagé entre l'étrier (14) et le montant (26).

6. Support de tuyau (10) selon l'une des revendications précédentes, **caractérisé en ce que** la fermeture (16) est en forme de crochet, un crochet d'étrier (160) étant disposé à l'extrémité libre (30) de l'étrier (14), et un crochet de base (161) étant disposé à l'extrémité libre (32) de la base de sorte qu'à l'état fermé le crochet d'étrier (160) s'engage autour du crochet de base (161).

7. Support de tuyau (10) selon l'une des revendications précédentes, **caractérisé en ce que** le crochet de base (161) est disposé latéralement, et est opposé à la butée (22).

8. Support de tuyau (10) selon l'une des revendications précédentes, **caractérisé en ce qu'**un ergot (34), qui fait saillie dans le réceptacle d'essuie-glace (20), est disposé du côté de l'étrier (14) qui est dirigé vers la cavité (200), l'ergot (34) étant disposé de préférence au niveau de la portion (140) de l'étrier (14) qui est opposé à peu près parallèlement à la base (21).

9. Support de tuyau (10) selon l'une des revendications précédentes, **caractérisé en ce que** le réceptacle de tuyau (18) comprend deux extensions (36) qui s'écartent du réceptacle d'essuie-glace (20) depuis la base (21), sensiblement un évidement circulaire (38) étant ménagé entre les extensions (36), le diamètre de l'évidement (38) étant supérieur à la distance entre les extrémités libres (40) des extensions (36).

10. Support de tuyau (10) selon l'une des revendications précédentes, **caractérisé en ce que** les extensions (36) ont partout la même épaisseur de paroi, les extensions (36) s'écartant de préférence de leur forme circulaire et comportant des portions droites.

11. Support de tuyau (10) selon l'une des revendications précédentes, **caractérisé en ce qu'**une extension (36) se transforme continument en l'étrier (14) .

12. Support de tuyau (10) selon l'une des revendications précédentes, **caractérisé en ce que** le support de tuyau (10) comporte à ses extrémités axiales (42) un bord (44) qui est dirigé radialement vers l'extérieur, le bord (44) ayant un rayon (46).

13. Support de tuyau (10) selon l'une des revendications précédentes, **caractérisé en ce que** le support de tuyau (10) comporte une matière synthétique flexible.

14. Bras d'essuie-glace (12) comprenant un support de tuyau (10) selon l'une des revendications précédentes qui est monté sur un véhicule automobile (1).

15. Procédé de fabrication d'un support de tuyau (10) selon l'une des revendications précédentes, **caractérisé en ce que** le support de tuyau (10) est extrudé ou moulé par injection.
